# FASCICULE DE BREVET EUROPEEN

(11) **EP 2 643 407 B1**
(45) Date de publication et mention de la délivrance du brevet: **19.07.2017**
(21) Numéro de dépôt: 11785693.0
(22) Date de dépôt: 23.11.2011
(51) Int. Cl.: C08L 15/00, C08C 19/44, C08K 3/04

(54) **COMPOSITION CONTENANT UN ÉLASTOMÈRE DIÉNIQUE PARTICULIER ET UN NOIR DE CARBONE DE SURFACE SPÉCIFIQUE PARTICULIÈRE**
ZUSAMMENSETZUNG MIT EINEM BESTIMMTEN DIENELASTOMER UND RUSS MIT SPEZIFISCHEM OBERFLÄCHENBEREICH
COMPOSITION CONTAINING A PARTICULAR DIENE ELASTOMER AND A CARBON BLACK HAVING A PARTICULAR SPECIFIC SURFACE AREA

(30) Priorité: 23.11.2010 FR 1059642
(43) Date de publication de la demande: 02.10.2013
(73) Titulaire: Compagnie Générale des Etablissements Michelin, 63000 Clermont-Ferrand (FR)
(72) Inventeur: CAMBON, Stéphanie, F-63040 Clermont-Ferrand cedex 09 (FR); THOMASSON, Damien, F-63040 Clermont-Ferrand cedex 09 (FR)
(74) Mandataire: Le Cam, Véronique Marie Christine
(86) Numéro de dépôt international: PCT/EP2011/070743
(87) Numéro de publication internationale: WO 2012/069507

(56) Documents cités:
- EP-A1- 0 608 892
- EP-A1- 0 647 675
- EP-A1- 1 767 571
- US-A- 5 248 722

## Description

La présente invention se rapporte à une composition de caoutchouc à base d'un ou plusieurs élastomères diéniques fonctionnalisé et d'un ou plusieurs noirs de carbone de surface spécifique CTAB particulière, ainsi qu'à un article semi-fini la comprenant, et qu'un pneumatique incorporant un tel article semi-fini.

Depuis que les économies de carburant et la nécessité de préserver l'environnement sont devenues une priorité, il est souhaitable de produire des mélanges possédant de bonnes propriétés de résistance à l'usure tout en ayant une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, ce afin d'obtenir des pneumatiques possédant une résistance à l'usure améliorée sans pénalisation de la résistance au roulement. La sécurité lors du freinage sur sol mouillé est également une performance à ne pas dégrader. Enfin, les contraintes de productivité amènent également à devoir ne pas pénaliser, voire à améliorer, la mise en oeuvre des mélanges.

Il est connu, par exemple du document EP924227, que l'utilisation d'élastomères synthétiques caractérisés par une distribution des masses moléculaires monomodale et par un indice de polydispersité (défini comme le rapport entre la masse moléculaire moyenne en poids Mw et la masse moléculaire moyenne en nombre Mn) supérieur à 2 conduit à une pénalisation de l'hystérèse des mélanges.

Il est également connu du document EP 1 278 779 que la présence de blocs polyisoprène en extrémité de chaîne dans les polymères décrits confère aux compositions de caoutchouc les contenant une hystérèse réduite et une aptitude à la mise en oeuvre non dégradée.

Il est également connu du document EP 608 892 que l'utilisation de noir de carbone à haute surface spécifique permet d'améliorer la résistance à l'usure de pneumatiques.

Il existe donc un besoin de fournir une composition de caoutchouc qui permette d'obtenir des pneumatiques possédant une résistance à l'usure améliorée et caractérisés par une diminution de la résistance au roulement, sans pénalisation de la mise en oeuvre et de l'adhérence sur sol mouillé.

La demanderesse a découvert de manière surprenante qu'une composition de caoutchouc à base d'un ou plusieurs élastomères diéniques fonctionnalisés et d'un ou plusieurs noirs de carbone de surface spécifique CTAB (mesurée selon la norme NFT 45-007, novembre 1987, méthode B) variant de 100 à 200 m²/g, le ou lesdits élastomères diéniques fonctionnalisés étant composés d'un élastomère diénique particulier fonctionnalisé en extrémité de chaîne ou en milieu de chaîne par une fonction étain, et d'un taux inférieur à 15% en poids par rapport au poids total de l'élastomère diénique fonctionnalisé d'un élastomère non fonctionnel étain particulier, permettait d'atteindre ces objectifs.

L'invention a donc pour objet une composition de caoutchouc à base d'un ou plusieurs élastomères diéniques fonctionnalisés et d'un ou plusieurs noirs de carbone de surface spécifique CTAB variant de 100 à 200 m²/g, de préférence de 120 à 180 m²/g, le ou lesdits élastomères diéniques fonctionnalisés étant composés :
a) d'un élastomère diénique fonctionnalisé en extrémité de chaîne ou en milieu de chaîne par une fonction étain et répondant à la formule suivante :

   [*A*]*ₙ*-*X*-[*A*]*ₘ*

   où n et m sont des entiers supérieurs ou égaux à 0 tels que n+m=1 ou 2,
b) d'un taux inférieur à 15% en poids par rapport au poids total de l'élastomère diénique fonctionnalisé d'un élastomère non fonctionnel étain répondant à la formule suivante :

   [*A*]

   Où:
   - A est un élastomère diénique, les blocs A étant identiques entre eux,
   - X est un groupe contenant de l'étain,
   - l'élastomère A présente une distribution de masses moléculaires monomodale avant fonctionnalisation éventuelle et un indice de polydispersité avant fonctionnalisation éventuelle inférieur ou égal à 1,3.

Selon un mode de réalisation préféré, l'élastomère diénique fonctionnalisé selon l'invention comprend un élastomère diénique c) étoilé étain répondant à la formule suivante :

[*A*]*ₒ*-*Y*-[*A*]*ₚ*

où
- o et p sont des entiers supérieurs ou égaux à 0 et tels que o+p≥3 et o+p≤6,
- A est l'élastomère diénique tel que défini précédemment, étant entendu qu'il présente une distribution de masses moléculaires monomodale avant étoilage et un indice de polydispersité avant étoilage inférieur ou égal à 1,3,
- Y est un groupe contenant de l'étain.

A titre préférentiel, l'élastomère diénique fonctionnalisé selon l'invention comprend de 5% à 45% en poids, préférentiellement de 10% à 30% en poids par rapport au poids total de l'élastomère diénique fonctionnalisé dudit élastomère étoilé étain c).

De préférence, l'élastomère diénique fonctionnalisé selon l'invention comprend un taux strictement supérieur à 0% en poids et inférieur à 10% en poids, et plus préférentiellement un taux inférieur à 5% en poids par rapport au poids total de l'élastomère diénique fonctionnalisé dudit élastomère non fonctionnel étain b).

Par l'expression composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa vulcanisation.

Dans la présente description, on entend par élastomère diénique fonctionnalisé un élastomère diénique qui comporte un groupement comprenant un ou plusieurs hétéroatomes.

Ce groupement peut se situer en bout de chaîne. On dira alors que l'élastomère diénique est fonctionnalisé en bout de chaîne ou en extrémité de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes ou branches élastomères (n>2) sont liées formant une structure en étoile de l'élastomère. On dira alors que l'élastomère diénique est étoilé à n branches. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

Par indice de polydispersité, on entend au sens de l'invention le rapport masse moléculaire moyenne en poids/masse moléculaire moyenne en nombre. La valeur théorique minimale étant de 1.

Comme expliqué précédemment, l'élastomère diénique a) est fonctionnalisé en extrémité ou en milieu de chaîne par une fonction étain. La fonctionnalisation peut être obtenue avec un agent de fonctionnalisation mono-halogénoétain ou di-halogénoétain pouvant répondre à la formule générale R₄₋ₓSnX⁰ₓ, où x représente un entier de valeur 1 ou 2, R représente un radical alkyle, cycloalkyle, aryle, alkaryle ou vinyle ayant de 1 à 12 atomes de carbone, de préférence un butyle, et X⁰ est un atome d'halogène, de préférence le chlore. A titre d'agent de fonctionnalisation préféré, on peut citer le monochlorure de tributyl étain ou le dichlorure de dibutyl étain. De la même manière, la fonctionnalisation peut être obtenue avec un agent de fonctionnalisation dérivé de l'étain pouvant répondre à la formule générale (X¹_{y}R¹_{3-y}Sn)-O-(SnR¹_{3-z}X¹_{z}) ou (X¹_{y} R¹_{3-y}Sn)-O-(CH₂)ₑ-O-(SnR¹_{3-z}X¹_{z}), où y et z représentent des entiers compris entre 0 et 2 et y+z égal à 1 ou 2, R¹ représente un radical alkyle, cycloalkyle, aryle, alkaryle ou vinyle ayant de 1 à 12 atomes de carbone, de préférence un butyle, X¹ est un atome d'halogène, de préférence le chlore, et e représente un entier de 1 à 20, de préférence 4.

L'élastomère diénique c), lorsqu'il est présent, est étoilé par une fonction étain. L'étoilage peut être obtenu avec un agent d'étoilage tri ou tétra-halogénoétain pouvant répondre à la formule générale R²_{q}SnX²_{4-q}, où q représente un entier de valeur 0 ou 1, R² représente un radical alkyle, cycloalkyle, aryle, alkaryle ou vinyle ayant de 1 à 12 atomes de carbone, de préférence un butyle, et X² est un atome d'halogène, de préférence le chlore. A titre d'agent d'étoilage préféré, on peut citer le trichlorure de butyl étain ou le tétrachlorure d'étain. De la même manière, l'étoilage peut être obtenu avec un agent de fonctionnalisation dérivé de l'étain pouvant répondre à la formule générale (X³ₖR³₃₋ₖSn)-O-(SnR³₃₋₁X³₁) ou (X³ₖR³₃₋ₖSn)-O-(CH2)_{f}-O-(SnR³₃₋₁X³₁), où k et 1 représentent des entiers compris entre 0 et 3, k+1 des entiers compris entre 3 et 6, R³ représente un radical alkyle, cycloalkyle, aryle, alkaryle ou vinyle ayant de 1 à 12 atomes de carbone, de préférence un butyle, X³ est un atome d'halogène, de préférence le chlore et f représente un entier de valeur de 1 à 20 de préférence 4.

Selon un mode de réalisation préféré, l'élastomère diénique a) est un élastomère diénique fonctionnalisé par une fonction étain en milieu de chaîne.

Selon un autre mode de réalisation préféré, l'élastomère diénique c) est un élastomère diénique étoilé étain à 4 branches.

Selon un autre mode de réalisation préféré, l'élastomère diénique a) est un élastomère diénique fonctionnalisé par une fonction étain en milieu de chaîne et l'élastomère diénique c) est un élastomère diénique étoilé étain à 4 branches.

Selon l'invention, l'élastomère diénique b) est non fonctionnel étain. Ledit élastomère peut être obtenu pendant la fonctionnalisation.

Selon l'invention, comme expliqué précédemment, l'élastomère diénique a) fonctionnalisé en extrémité de chaîne ou en milieu de chaîne par une fonction étain, présente une distribution de masses moléculaires monomodale avant fonctionnalisation et un indice de polydispersité avant fonctionnalisation inférieur à 1,3.

De même, comme expliqué précédemment, l'élastomère diénique étoilé c), lorsqu'il est présent, présente une distribution de masses moléculaires monomodale avant étoilage et un indice de polydispersité avant étoilage inférieur à 1,3.

Par élastomère diénique, on entend selon l'invention tout homopolymère obtenu par polymérisation d'un monomère diène conjugué ayant 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de monomères diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

A titre préférentiel, l'élastomère diénique est choisi parmi les polybutadiènes, les copolymères statistiques ou bloc butadiène-styrène, les copolymères statistiques ou bloc butadiène-isoprène, les copolymères statistiques ou bloc butadiène-styrène-isoprène, les copolymères statistiques ou bloc styrène-isoprène et le polyisoprène de synthèse.

A ce titre conviennent les polybutadiènes et en particulier ceux ayant une teneur (% molaire) en unités -1,2 comprise entre 4% et 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 55°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

Selon un premier mode de réalisation particulier, l'élastomère diénique [A]-peut répondre à la formule suivante :

[*B-C*]*-*

où :
- le bloc B est constitué d'un polyisoprène ou d'un polybutadiène,
- le bloc C est constitué d'un élastomère diénique dont le taux molaire d'unités issues de diènes conjugués est supérieur à 15%,
- la masse moléculaire moyenne en nombre Mn1 du bloc B varie de 2 500 à 20 000 g/mol,
- la masse moléculaire moyenne en nombre Mn2 du bloc C varie de 80 000 à 350 000 g/mol,
- le taux d'enchaînements 1,2 dans le bloc B est compris entre 1 et 20% dans le cas où B est un bloc polybutadiène,
- le taux d'enchaînements 3,4 dans chaque bloc B est compris entre 1 et 25% dans le cas où B est un bloc polyisoprène,
- le copolymère B-C présente une distribution de masses moléculaires monomodale avant fonctionnalisation éventuelle ou étoilage éventuel et un indice de polydispersité avant fonctionnalisation éventuelle ou étoilage éventuel inférieur ou égal à 1,3.

De préférence, le rapport de la masse moléculaire moyenne en nombre Mn1 de chaque bloc polybutadiène ou polyisoprène d'extrémité B sur la masse moléculaire moyenne en nombre Mn2 de chacun des blocs C varie de 5 à 20%.

Préférentiellement, le ou les blocs C sont choisis parmi les copolymères du styrène et du butadiène, les copolymères du styrène et de l'isoprène, les copolymères du butadiène et de l'isoprène, les copolymères de styrène/butadiène/isoprène, le polyisoprène lorsque le bloc B voisin est un polybutadiène, et le polybutadiène lorsque le bloc B voisin est un polyisoprène. Et plus préférentiellement, le ou les blocs C sont choisis parmi les copolymères du styrène et du butadiène.

Selon un sous-mode de réalisation particulièrement préféré, B est le polyisoprène, C est un copolymère du styrène et du butadiène, le copolymère à blocs a) étant fonctionnalisé par l'agent de fonctionnalisation dichlorure de dibutyl étain (Bu₂SnCl₂) et le copolymère à blocs c) étant étoilé par l'agent d'étoilage tétrachlorure d'étain (SnCl₄).

Selon un autre sous-mode de réalisation particulièrement préféré, B est le polybutadiène, C est un copolymère du styrène et du butadiène, le copolymère à blocs a) étant fonctionnalisé par l'agent de fonctionnalisation dichlorure de dibutyl étain (Bu₂SnCl₂) et le copolymère à blocs c) étant étoilé par l'agent d'étoilage tétrachlorure d'étain (SnCl₄).

Selon un deuxième mode de réalisation particulier de l'invention, l'élastomère diénique a) peut comprendre une fonction amine à l'une ou toutes les extrémités de la chaîne non fonctionnalisée étain. De même, l'élastomère diénique c) éventuellement présent peut comprendre une fonction amine aux extrémités des chaînes non étoilées étain. De même, l'élastomère diénique non fonctionnel étain b) peut comprendre une fonction amine à l'une des extrémités de la chaîne.

La polymérisation de monomères diéniques est amorcée par un initiateur. En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. De préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi), l'isobutyllithium.

Selon un mode de réalisation particulier de l'invention, lorsque l'élastomère diénique comprend une fonction amine à l'une ou toutes les extrémités de la chaîne, on peut également citer les organolithiens comportant une liaison azote-lithium, tels que les composés répondant à la formule Li(NR₁R₂)ₐ(NR₃)_{b}(R₄)_{c}, dans laquelle R₁ et R₂ désignent un radical alkyle, cycloalkyle, aryle contenant de 1 à 20 atomes de carbone, R₃ un radical alkyle cyclique, ramifié ou non, contenant de 3 à 16 atomes de carbone, R₄ un radical alkyle, cycloalkyle, aryle contenant de 1 à 20 atomes de carbone, et a, b et c sont des entiers compris entre 0 et 4 sous réserve que a+b+c=4 et a+b ≥ 1.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu, de préférence en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique fonctionnalisé selon l'invention.

Selon un mode de préparation de l'élastomère diénique fonctionnalisé selon l'invention lorsque [A]- =[B-C]-, le copolymère à blocs en extrémité de chaîne vivant peut être préparé en différentes étapes :
- la préparation du bloc d'extrémité polyisoprène ou polybutadiène vivant, et
- la préparation de l'élastomère diénique essentiellement insaturé mis en oeuvre pour obtenir ledit bloc autre que le bloc polybutadiène ou polyisoprène.

Selon ce mode de préparation, la polymérisation de monomères diéniques, isoprène ou butadiène, est amorcée par lesdits initiateurs organolithiens afin d'obtenir un homopolymère diénique polyisoprène ou polybutadiène vivant. L'homopolymère diénique vivant ainsi obtenu est ensuite utilisé comme initiateur (amorceur) pour la préparation de l'élastomère diénique afin d'obtenir un copolymère à bloc vivant. Le lecteur averti comprendrait que pendant la deuxième étape de préparation des conditions de mise en ouvres adéquates doivent être mise en place afin de limiter la formation d'homopolymère diénique polyisoprène ou polybutadiène mort ou désactivé générant ainsi des chaînes de basse masse moléculaire. Une quantité supérieure à 1% en poids de ces chaînes polyisoprène ou polybutadiène pourrait pénaliser les propriétés de l'élastomère diénique fonctionnalisé selon l'invention.

Le copolymère à bloc vivant issu de la polymérisation est ensuite fonctionnalisé pour préparer l'élastomère diénique fonctionnalisé selon l'invention.

Selon une première variante de préparation de l'élastomère diénique fonctionnalisé présent dans la composition selon l'invention, on mélange l'élastomère diénique a) fonctionnalisé et l'éventuel élastomère diénique étoilé c), dans les proportions nécessaires pour minimiser le taux d'élastomère b).

L'élastomère diénique a) fonctionnalisé peut être obtenu de manière connue en soi par réaction d'un dérivé de l'étain sur l'élastomère diénique vivant issu de la polymérisation.

L'élastomère étoilé c) éventuel peut être obtenu de manière connue en soi par réaction d'un agent d'étoilage contenant de l'étain sur l'élastomère diénique vivant issu de la polymérisation.

Le mélangeage des deux élastomères peut s'effectuer dans un solvant inerte, par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. Le mélangeage est alors effectué à une température de préférence comprise entre 20°C et 120°C, de préférence voisine de 30°C à 90°C.

Selon une deuxième variante de préparation de l'élastomère diénique fonctionnalisé présent dans la composition selon l'invention, dans le cas où l'élastomère diénique étoilé c) est présent, l'élastomère diénique vivant issu de l'étape de polymérisation est soumis à la réaction d'un agent d'étoilage et à celle d'un agent de fonctionnalisation.

Ainsi, par exemple, la fonctionnalisation de l'élastomère diénique vivant issu de l'étape de polymérisation peut s'effectuer à une température variant de 30 à 120°C, en présence dans un premier temps d'une quantité appropriée d'un agent d'étoilage pour étoiler de préférence de 5 à 45% en poids de l'élastomère vivant. Puis, dans un deuxième temps, les chaînes vivantes restantes de l'élastomère diénique obtenu après la première étape sont fonctionnalisées par adjonction d'un agent de fonctionnalisation à l'étain, susceptible d'introduire en extrémité de chaîne ou en milieu de chaîne une fonction étain. La réaction de fonctionnalisation de l'élastomère diénique est ensuite stoppée par la désactivation des chaînes vivantes restantes.

Le lecteur averti comprendrait que pendant les étapes de préparation des élastomères diéniques fonctionnalisés a) et c), dans le cas où l'élastomère diénique étoilé c) est présent, des conditions de mise en oeuvre adéquates doivent être mises en place afin de limiter la formation de l'élastomère diénique b) non fonctionnalisé étain.

Le ou les élastomères diéniques fonctionnalisés représentent généralement de 30 à 100 pce de la composition.

Comme expliqué précédemment, la composition selon l'invention comprend à titre de charge majoritaire un ou plusieurs noirs de carbone de surface spécifique CTAB variant de 100 à 200 m²/g, de préférence de 120 à 180 m²/g.

Dans le cadre de la présente invention, la surface spécifique CTAB est déterminée selon la norme NFT 45-007 (novembre 1987, méthode B).

Au-delà d'une surface spécifique CTAB de 200 m2/g, la combinaison du noir de carbone avec un élastomère diénique conduit à une pénalisation de l'hystérèse du mélange et donc à une pénalisation de la résistance au roulement du pneumatique inacceptable.

Comme noirs de carbone conviennent tous les noirs de carbone, notamment les noirs du type HAF, ISAF, SAF conventionnellement utilisés dans les pneumatiques (noirs dits de grade pneumatique) dont la surface spécifique CTAB (déterminée selon la norme française NF T 45-007 de novembre 1987, méthode B) supérieure ou égale à 100 m²/g, ce qui correspond en particulier à des noirs de carbone renforçant tels que le « CRX1346 » ou les noirs des séries 100, 200 (grades ASTM), comme par exemple les noirs N115, N134, N220 et N234. Plus préférentiellement les noirs de carbone auront une surface spécifique d'au moins 100 m²/g et d'au plus 200 m²/g, particulièrement d'au moins 120 m²/g et d'au plus 180 m²/g.

Le ou les noirs de carbone de surface spécifique CTAB variant de 100 à 200 m²/g représentent généralement au moins 30 et au plus 130 pce, préférentiellement au plus 100 pce. De manière préférentielle, ce taux est compris dans un domaine allant de 30 à 90 pce, préférentiellement de 30 à 70 pce, plus préférentiellement de 40 à 60 pce.

La composition selon l'invention peut également comprendre à titre de charge non majoritaire une ou plusieurs autres charges renforçantes différentes des noirs de carbone de surface spécifique CTAB variant de 100 à 200 m²/g.

On peut utiliser à titre de charge non majoritaire tout type de charge renforçante connue pour ses capacités à renforcer une composition de caoutchouc utilisable pour la fabrication de pneumatiques, par exemple une charge organique renforçante tel que du noir de carbone de surface spécifique CTAB inférieure à 100 m²/g.

On peut aussi utiliser, selon les applications visées, des noirs de séries plus élevées FF, FEF, GPF, SRF, par exemple les noirs N660, N683, N772. Les noirs de carbone pourraient être par exemple déjà incorporés à l'élastomère isoprénique sous la forme d'un masterbatch (voir par exemple demandes WO 97/36724 ou WO 99/16600).

D'autres types de charge renforçante peuvent être utilisés en coupage avec le noir de carbone, notamment d'autres charges organiques renforçantes ou des charges inorganiques renforçantes.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsqu'elle est présente dans la composition, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les bandes de roulement conformes à l'invention, la teneur en agent de couplage est préférentiellement comprise entre 0,3 et 12 pce, plus préférentiellement selon les applications entre 0,5 et 3 pce ou entre 3 et 8 pce. Mais il est en général souhaitable d'en utiliser le moins possible. Par rapport au poids de charge inorganique renforçante, le taux d'agent de couplage représente typiquement d'au moins 0,5% et au plus 15%, voire au plus 12%, en poids par rapport à la quantité de charge inorganique.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

De préférence, le taux de charge dans la composition est d'au moins 30 pce, plus préférentiellement au moins 50 pce, et d'au plus 150 pce, plus préférentiellement au plus 120 pce. L'optimum est différent selon les applications particulières visées. L'homme du métier sait en outre adapter le taux total de charge renforçante totale (noir de carbone et charge inorganique renforçante telle que silice), en fonction d'une part de la surface spécifique de ce taux total et d'autre part des valeurs de performance résistance au roulement, usure et adhérence mouillé qui doivent être atteintes pour le pneumatique considéré.

La composition selon l'invention peut également comprendre au moins un élastomère diénique différent dudit élastomère diénique fonctionnalisé selon l'invention. Ce ou ces élastomères diéniques différents de l'élastomère diénique fonctionnalisé selon l'invention peuvent être choisis parmi les élastomères diéniques conventionnellement utilisés dans les pneus, tel que le caoutchouc naturel ou un élastomère synthétique, ou encore un autre élastomère fonctionnalisé ou étoilé.

La composition selon l'invention peut également comprendre un agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

La composition selon l'invention est fabriquée dans un mélangeur approprié, en utilisant deux phases de préparation successives bien connues de l'homme du métier : une première phase de travail ou malaxage thermo-mécanique (parfois qualifiée de phase « non-productive » à haute température, jusqu'à une température maximale (notée Tmax) comprise entre 100°C et 190°C, de préférence entre 130°C et 180°C, suivie d'une deuxième phase de travail mécanique (parfois qualifiée de phase « productive ») à plus basse température, typiquement inférieure à 110°C, par exemple entre 60°C et 100°C, phase de finition au cours de laquelle est incorporé l'agent de réticulation chimique ; de telles phases ont été décrites dans les demandes EP-A-0501227, EP-A-0735088, EP-A-0810258, WO00/05300 ou WO00/05301.

Dans le procédé conforme à l'invention, la première phase (non-productive) est conduite préférentiellement en deux étapes thermomécaniques. Au cours de la première étape on introduit, dans un mélangeur approprié tel qu'un mélangeur interne usuel, tous les constituants de base nécessaires, à l'exception de l'agent de réticulation chimique. Cette première étape est réalisée à une température comprise entre 110°C et 190°C et, de préférence, entre 130°C et 180°C. La durée totale de malaxage est de préférence comprise entre 2 et 5 minutes.

Après refroidissement du mélange ainsi obtenu, on incorpore alors l'agent de réticulation chimique à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement.

La vulcanisation (ou cuisson) est conduite de manière connue à une température généralement comprise entre 130°C et 200°C, sous pression, pendant un temps suffisant qui peut varier par exemple entre 5 et 90 minutes en fonction notamment de la température de cuisson, du système de vulcanisation adopté, de la cinétique de vulcanisation de la composition considérée ou encore de la taille du pneumatique.

L'invention a encore pour objet un article semi-fini en caoutchouc pour pneumatique, comprenant la composition de caoutchouc selon l'invention. De préférence, ledit article est une bande de roulement.

L'invention a enfin pour objet un pneumatique comportant un article semi-fini selon l'invention.

La présente invention est illustrée par les exemples qui suivent.

### Exemples

L'objet de cet exemple est de comparer les propriétés de mise en oeuvre et les propriétés dynamiques de différentes compositions de caoutchouc, ainsi que les performances pneumatiques de bandes de roulement obtenues à partir de ces compositions de caoutchouc.

La composition A0 est une composition témoin.

Les compositions A2 et A5 sont des compositions comparatives.

Les compositions A1, A3, A4, A6 et A7 sont des compositions selon l'invention.

Les compositions A0, A2 et A5 contiennent 85 pce de SBR standard et se distinguent par le taux et la finesse de noir de carbone :
- A0 contient 56,5 pce de N234 (surface spécifique CTAB =120 m²/g)
- A2 contient 56,5 pce de N134 (surface spécifique CTAB =135 m²/g)
- A5 contient 54 pce de CRX1346 (surface spécifique CTAB =160 m²/g)

Les compositions A1, A3 et A6 contiennent 85 pce de SBR à faible indice de polydispersité conforme à l'invention et se distinguent par le taux et la finesse du noir de carbone :
- A1 contient 56,5 pce de N234 (surface spécifique CTAB =120 m²/g)
- A3 contient 56,5 pce de N134 (surface spécifique CTAB =135 m²/g)
- A6 contient 54 pce de CRX1346 (surface spécifique CTAB =160 m²/g)
Les compositions A4 et A7 contiennent 85 pce de SBR à blocs polyisoprène à faible indice de polydispersité conforme à l'invention et se distinguent par le taux et la finesse du noir de carbone :
- A4 contient 56,5 pce de N134 (surface spécifique CTAB =135 m²/g)
- A7 contient 54 pce de CRX1346 (surface spécifique CTAB =160 m²/g)

Pour l'ensemble de ces compositions de caoutchouc, le taux de noir de carbone a été adapté de sorte à ce qu'elles aient la même rigidité G*50% crête à crête (propriété dynamique en cisaillement) telle que mesurée selon la norme ASTM D2231-71.

Les formulations des compositions de caoutchouc sont données dans le tableau 1. Les quantités sont exprimées en parties pour 100 parties en poids d'élastomère (pce).

**Tableau 1**

| Composition | A0 | A1 | A2 | A3 | A4 | A5 | A6 | A7 |
|---|---|---|---|---|---|---|---|---|
| NR (1) | 15 | 15 | 15 | 15 | 15 | 15 | 15 | 15 |
| SBR (2) | 85 | | 85 | | | 85 | | |
| SBR (3) | | 85 | | 85 | | | 85 | |
| SBR (4) | | | | | 85 | | | 85 |
| Noir de carbone N234 | 56,5 | 56,5 | | | | | | |
| Noir de carbone N134 | | | 56,5 | 56,5 | 56,5 | | | |
| Noir de carbone CRX1346 | | | | | | 54 | 54 | 54 |
| Paraffine | 1 | 1 | 1 | 1 | 1 | 1 | 1 | 1 |
| Antioxydant (5) | 2 | 2 | 2 | 2 | 2 | 2 | 2 | 2 |
| Acide stéarique | 2 | 2 | 2 | 2 | 2 | 2 | 2 | 2 |
| ZnO | 2.7 | 2.7 | 2.7 | 2.7 | 2.7 | 2.7 | 2.7 | 2.7 |
| Soufre | 1,1 | 1,1 | 1,1 | 1,1 | 1,1 | 1,1 | 1,1 | 1,1 |
| Accélérateur (6) | 1,1 | 1,1 | 1,1 | 1,1 | 1,1 | 1,1 | 1,1 | 1,1 |

| | | | | | | | | |
|---|---|---|---|---|---|---|---|---|
| (1) NR : caoutchouc naturel (plastifié, peptisé) (2) SBR fonctionnel étain à indice de polydispersité élevé : copolymère styrène butadiène avec les taux massiques suivants : 50% de BR 1,4-trans ; 26% de BR 1,4-cis ; 24% de BR 1,2 ; 26,5% de styrène (Tg =-48°C). La masse moléculaire Mn de ce polymère, déterminée par la technique SEC, est de 145 000 g.mol⁻¹, l'Ip est de 1,7. (3) SBR couplé étain à indice de polydispersité faible, conforme à l'invention : copolymère styrène butadiène avec les taux massiques suivants : 45,0% de BR 1,4-trans ; 30,3% de BR 1,4-cis ; 24,8% de BR 1,2 ; 28,2% de styrène (Tg =-49°C). La masse moléculaire Mn de ce polymère, déterminée par la technique SEC, est de 178 900 g.mol⁻¹, l'Ip est de 1,25. (4) SBR couplé étain à blocs polyisoprène, à indice de polydispersité faible, conforme à l'invention : copolymère styrène butadiène avec les taux massiques suivants : 46,6% de BR 1,4-trans ; 27,7% de BR 1,4-cis ; 25,7% de BR 1,2 ; 28,7% de styrène (Tg =-48°C). Le ratio PI/SBIR est de 10,5%. La masse moléculaire Mn de ce polymère, déterminée par la technique SEC, est de 169 000 g.mol⁻¹, l'Ip est de 1,26. (5) N-1,3 diméthylbutyl N-phénylparaphénylènediamine (6-PPD) (6) N-cyclohexyl-2-benzothiazylsulfénamide (CBS) | | | | | | | | |

Les compositions de caoutchouc sont caractérisées par les mesures suivantes.

La viscosité Mooney ML(1+4) à 100°C est mesurée selon la norme ASTM :D-1646.

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (60°C) selon la norme ASTM D 1349-99. On effectue un balayage en amplitude de déformation crête-crête de 0,1% à 100% (cycle aller), puis de 100% à 0,1% (cycle retour). Les résultats exploités sont le module complexe de cisaillement dynamique (G*) et le facteur de perte tan δ.

L'hystérèse (tan δ max) est exprimée par la mesure de tan delta à 7% de déformation selon la norme ASTM D2231-71.

Les bandes de roulement ont été fabriquées à partir des compositions de caoutchouc récapitulées dans le tableau 1, conformément au procédé détaillé dans la description.

Les essais d'usure ont été réalisés pour des pneumatiques de dimensions 315/70R22.5 XZE2 montés sur la position avant d'un camion de type tracteur. Le roulage d'usure est mené sur une distance de 60 000 km. La performance usure exprimée en base 100 du témoin est calculée par le ratio entre la perte de hauteur moyenne mesurée pour les deux pneus de la composition témoin A0 et la perte de hauteur moyenne pour les deux pneus de la composition An (0≤n≤7).

La mesure de résistance au roulement est pratiquée selon la norme ISO 9948, applicable aux pneus pour camionnettes et poids lourds. On fait rouler le pneu sur un volant de grand diamètre, entraîné par un moteur. La méthode consiste à mesurer la décélération du système au voisinage de 80 km/h pour en déduire la résistance au roulement.

La résistance au roulement exprimée en base 100 du témoin est exprimée comme le rapport entre la force de résistance au roulement du pneu témoin constitué de la composition A0 et la force de résistance au roulement du pneu constitué de la composition An (1≤n≤7). La force de résistance au roulement est déduite de la force freineuse globale mesurée à laquelle on soustrait la force de ralentissement du pneu libre et la force de ralentissement du volant libre.

Les résultats obtenus sont présentés dans le tableau 2 qui suit, en unités relatives pour les performances pneumatiques. Une valeur supérieure à 100 indique un résultat de performance pneu amélioré. Une diminution de la valeur de plasticité Mooney indique une amélioration de la mise en oeuvre.

**Tableau 2**

| Composition | A0 | A1 | A2 | A3 | A4 | A5 | A6 | A7 |
|---|---|---|---|---|---|---|---|---|
| Propriétés à l'état non vulcanisé | | | | | | | | |
| Plasticité Mooney ML(1+4) | 128 | 110 | 131 | 112 | 115 | 136 | 117 | 121 |
| Propriétés dynamiques en fonction de la déformation | | | | | | | | |
| G*50%cc, 60°C (courbe aller) | 2,18 | 2,12 | 2,20 | 2,13 | 2,13 | 2,21 | 2,14 | 2,15 |
| Tan delta max 60°C (courbe aller) | 0,204 | 0,182 | 0,207 | 0,184 | 0,168 | 0,213 | 0,190 | 0,175 |
| Performances pneu | | | | | | | | |
| Usure | 100 | 100 | 105 | 105 | 105 | 108 | 108 | 108 |
| Résistance au roulement | 100 | 104 | 98 | 103 | 106 | 97 | 100 | 105 |

La comparaison entre les compositions A0 et A1 met en évidence le fait connu que l'utilisation d'un SBR à faible indice de polydispersité en remplacement d'un SBR à indice de polydispersité élevé améliore la mise en oeuvre (diminution de la plasticité Mooney), la résistance au roulement, sans pénalisation de l'usure.

La comparaison entre la composition A0, A2 et A5 met en évidence le fait connu que l'augmentation de la surface spécifique des noirs de carbone améliore la résistance à l'usure des pneumatiques mais s'accompagne d'une augmentation de la plasticité Mooney et d'une pénalisation de la résistance au roulement inacceptables (A2 et A5).

On constate que les compositions A3, A4, A6 et A7 conformes à l'invention (combinaison d'un élastomère à faible indice de polydispersité et d'un noir de carbone de surface spécifique supérieure ou égale à 120 m²/g) présentent une amélioration significative de l'usure, de la résistance au roulement (A3, A4 et A7), sans pénalisation de la mise en oeuvre (plasticité Mooney), en comparaison des performances de la composition du témoin A0.

En conclusion, la combinaison d'un élastomère diénique, d'un élastomère diénique caractérisé par un rapport Mw/Mn compris entre 1,2 et 1,5 et d'un noir de carbone de surface spécifique CTAB comprise entre 100 et 200 m²/g permet d'améliorer l'usure et la résistance au roulement du pneumatique sans pénaliser la mise en oeuvre du mélange, ce qui constitue une nouveauté.

## Revendications

1. Composition de caoutchouc à base d'un ou plusieurs élastomères diéniques fonctionnalisés et à titre de charge majoritaire d'un ou plusieurs noirs de carbone de surface spécifique CTAB mesurée selon la norme NFT 45-007, novembre 1987, méthode B) variant de 100 à 200 m²/g, de préférence de 120 à 180 m²/g, le ou lesdits élastomères diéniques fonctionnalisés étant composés :
a) d'un élastomère diénique fonctionnalisé en extrémité de chaîne ou en milieu de chaîne par une fonction étain et répondant à la formule suivante :
[*A*]*ₙ*-*X-*[*A*]*ₘ*
où n et m sont des entiers supérieurs ou égaux à 0 tels que n+m=1 ou 2,
b) d'un taux inférieur à 15% en poids par rapport au poids total de l'élastomère diénique fonctionnalisé d'un élastomère non fonctionnel étain répondant à la formule suivante :
[*A*]
Où:
- A est un élastomère diénique, les blocs A étant identiques entre eux,
- X est un groupe contenant de l'étain,
- l'élastomère A présente une distribution de masses moléculaires monomodale avant fonctionnalisation éventuelle et un indice de polydispersité avant fonctionnalisation éventuelle inférieur ou égal à 1,3.

2. Composition selon la revendication 1 **caractérisée en ce que** l'élastomère diénique fonctionnalisé comprend un élastomère diénique c) étoilé étain répondant à la formule suivante :
[*A*]*ₒ*-*Y*-[*A*]*ₚ*
où
- o et p sont des entiers supérieurs ou égaux à 0 et tels que o+p≥3, et o+p≤6,
- A est l'élastomère diénique tel que défini à la revendication 1, étant entendu qu'il présente une distribution de masses moléculaires monomodale avant étoilage et un indice de polydispersité avant étoilage inférieur ou égal à 1,3,
- Y est un groupe contenant de l'étain.

3. Composition selon la revendication 2 **caractérisée en ce que** l'élastomère diénique fonctionnalisé comprend de 5% à 45% en poids, préférentiellement de 10% à 30% en poids par rapport au poids total de l'élastomère diénique fonctionnalisé dudit élastomère étoilé étain c).

4. Composition selon l'une quelconque des revendications 1 à 3 **caractérisée en ce que** l'élastomère diénique fonctionnalisé selon l'invention comprend un taux strictement supérieur à 0% en poids et inférieur à 10% en poids, et plus préférentiellement un taux inférieur à 5% en poids par rapport au poids total de l'élastomère diénique fonctionnalisé dudit élastomère non fonctionnel étain b).

5. Composition selon l'une quelconque des revendications précédentes **caractérisée en ce que** la fonctionnalisation de l'élastomère diénique a) est obtenue avec un agent de fonctionnalisation mono-halogénoétain ou di-halogénoétain.

6. Composition selon l'une quelconque des revendications précédentes **caractérisée en ce que** l'étoilage de l'élastomère diénique c) peut être obtenu avec un agent d'étoilage tri ou tétra-halogénoétain.

7. Composition selon l'une quelconque des revendications précédentes **caractérisée en ce que** l'élastomère diénique étoilé c) est un élastomère étoilé 4 branches.

8. Composition selon l'une quelconque des revendications précédentes **caractérisée en ce que** l'élastomère diénique est choisi parmi les polybutadiènes, les copolymères statistiques ou bloc butadiène-styrène, les copolymères statistiques ou bloc butadiène-isoprène, les copolymères statistiques ou bloc butadiène-styrène-isoprène, les copolymères statistiques ou bloc styrène-isoprène et le polyisoprène de synthèse.

9. Composition selon l'une quelconque des revendications précédentes **caractérisée en ce que** l'élastomère diénique [A]- répond à la formule suivante :
[*B-C*]*-*
où :
- le bloc B est constitué d'un polyisoprène ou d'un polybutadiène,
- le bloc C est constitué d'un élastomère diénique dont le taux molaire d'unités issues de diènes conjugués est supérieur à 15%,
- la masse moléculaire moyenne en nombre Mn1 du bloc B varie de 2 500 à 20 000 g/mol,
- la masse moléculaire moyenne en nombre Mn2 du bloc C varie de 80 000 à 350 000 g/mol,
- le taux d'enchaînements 1,2 dans le bloc B est compris entre 1 et 20% dans le cas où B est un bloc polybutadiène,
- le taux d'enchaînements 3,4 dans chaque bloc B est compris entre 1 et 25% dans le cas où B est un bloc polyisoprène,
- le copolymère B-C présente une distribution de masses moléculaires monomodale avant fonctionnalisation éventuelle ou étoilage éventuel et un indice de polydispersité avant fonctionnalisation éventuelle ou étoilage éventuel inférieur ou égal à 1,3.

10. Composition selon la revendication 9 **caractérisée en ce que** le rapport de la masse moléculaire moyenne en nombre Mn1 de chaque bloc polybutadiène ou polyisoprène d'extrémité B sur la masse moléculaire moyenne en nombre Mn2 de chacun des blocs C varie de 5 à 20%.

11. Composition selon la revendication 9 ou 10 **caractérisée en ce que** le bloc C est choisi parmi les copolymères du styrène et du butadiène, les copolymères du styrène et de l'isoprène, les copolymères du butadiène et de l'isoprène les copolymères de styrène/butadiène/isoprène, le polyisoprène lorsque le bloc B voisin est un polybutadiène, et le polybutadiène lorsque le bloc B voisin est un polyisoprène.

12. Composition selon l'une quelconque des revendications 1 à 8 **caractérisée en ce que** l'élastomère diénique a) comprend une fonction amine à l'une ou toutes les extrémités de chaînes non fonctionnalisée étain.

13. Composition selon l'une quelconque des revendications 1 à 8 **caractérisée en ce que** l'élastomère diénique b) comprend une fonction amine à l'une des extrémités de chaînes.

14. Composition selon l'une quelconque des revendications 1 à 8 **caractérisée en ce que** l'élastomère diénique c) comprend une fonction amine aux extrémités de chaînes non étoilées étain.

15. Composition selon l'une quelconque des revendications précédentes **caractérisée en ce que** le ou les élastomères diéniques fonctionnalisés représentent de 30 à 100 pce de la composition.

16. Composition selon l'une quelconque des revendications précédentes **caractérisé en ce que** le ou les noirs de carbone de surface spécifique CTAB variant de 100 à 200 m²/g, de préférence de 120 à 180 m²/g représentent de 30 à 100 pce.

17. Composition selon l'une quelconque des revendications précédentes **caractérisé en ce qu'**elle comprend un agent de réticulation chimique.

18. Article semi-fini en caoutchouc pour pneumatique, **caractérisé en ce qu'**il comprend une composition de caoutchouc telle que définie dans l'une quelconque des revendications précédentes.

19. Article semi-fini selon la revendication 18 **caractérisé en ce que** ledit article est une bande de roulement.

20. Pneumatique **caractérisé en ce qu'**il comporte un article semi-fini tel que défini dans la revendication 18 ou 19.

## Patentansprüche

1. Kautschukzusammensetzung auf Grundlage von einem oder mehreren funktionalisierten Dienelastomeren und als hauptsächlichem Füllstoff einem oder mehreren Rußen mit einer spezifischen CTAB-Oberfläche, gemessen nach der Norm NFT 45-007, November 1987, Verfahren B), zwischen 100 und 200 m²/g, vorzugsweise zwischen 120 und 180 m²/g, wobei das oder die funktionalisierten Dienelastomere zusammengesetzt sind aus:
a) einem Dienelastomer, das am Kettenende oder in der Kettenmitte mit einer funktionellen Zinngruppe funktionalisiert ist und folgender Formel entspricht:
[A]ₙ-X-[A]ₘ
wobei n und m ganze Zahlen größer gleich 0 sind, sodass n + m = 1 oder 2,
b) einem nicht mit Zinn funktionalisierten Elastomer mit einem Gehalt bezogen auf das Gesamtgewicht des funktionalisierten Dienelastomers von unter 15 Gewichts-%, das folgender Formel entspricht:
[A]
wobei:
- A ein Dienelastomer ist, wobei die A-Blöcke zueinander identisch sind,
- X eine Zinn enthaltende Gruppe ist,
- das Elastomer A eine monomodale Molmassenverteilung vor einer etwaigen Funktionalisierung und einen Polydispersitätsindex vor einer etwaigen Funktionalisierung kleiner gleich 1,3 aufweist.

2. Zusammensetzung nach Anspruch 1, **dadurch gekennzeichnet, dass** das funktionalisierte Dienelastomer ein mittels Zinn sternförmig verzweigtes Dienelastomer c) umfasst, das folgender Formel entspricht:
[A]ₒ-Y-[A]ₚ
wobei
- o und p ganze Zahlen größer gleich 0 sind und sodass o + p ≥ 3 und o + p ≤ 6,
- A das Dienelastomer nach Anspruch 1 ist, wobei es eine monomodale Molmassenverteilung vor der Sternbildung und einen Polydispersitätsindex vor der Sternbildung kleiner gleich 1,3 aufweist,
- Y eine Zinn enthaltende Gruppe ist.

3. Zusammensetzung nach Anspruch 2, **dadurch gekennzeichnet, dass** das funktionalisierte Dienelastomer bezogen auf das Gesamtgewicht des funktionalisierten Dienelastomers von 5 Gewichts-% bis 45 Gewichts-%, vorzugsweise von 10 Gewichts-% bis 30 Gewichts-%, des mittels Zinn sternförmig verzweigten Elastomers c) aufweist.

4. Zusammensetzung nach einem der Ansprüche 1 bis 3, **dadurch gekennzeichnet, dass** das erfindungsgemäße funktionalisierte Dienelastomer bezogen auf das Gesamtgewicht des funktionalisierten Dienelastomers einen Gehalt des nicht mit Zinn funktionalisierten Elastomers b) von strikt über 0 Gewichts-% und unter 10 Gewichts-%, und weiter bevorzugt einen Gehalt von unter 5 Gewichts-%, aufweist.

5. Zusammensetzung nach einem der vorhergehenden Ansprüche, **dadurch gekennzeichnet, dass** die Funktionalisierung des Dienelastomers a) mit einem Monohalogenozinn- oder Dihalogenozinn-Funktionalisierungsmittel erzielt wird.

6. Zusammensetzung nach einem der vorhergehenden Ansprüche, **dadurch gekennzeichnet, dass** die sternförmige Verzweigung des Dienelastomers c) mit einem Tri- oder Tetrahalogenozinn-Sternbildungsmittel erzielt werden kann.

7. Zusammensetzung nach einem der vorhergehenden Ansprüche, **dadurch gekennzeichnet, dass** das sternförmig verzweigte Dienelastomer c) ein sternförmig verzweigtes Elastomer mit 4 Armen ist.

8. Zusammensetzung nach einem der vorhergehenden Ansprüche, **dadurch gekennzeichnet, dass** das Dienelastomer ausgewählt ist aus Polybutadienen, statistischen Butadien-Styrol-Copolymeren oder Butadien-Styrol-Blockcopolymeren, statistischen Butadien-Isopren-Copolymeren oder Butadien-Isopren-Blockcopolymeren, statistischen Butadien-Styrol-Isopren-Copolymeren oder Butadien-Styrol-Isopren-Blockcopolymeren, statistischen Styrol-Isopren-Copolymeren oder Styrol-Isopren-Blockcopolymeren und synthetischem Polyisopren.

9. Zusammensetzung nach einem der vorhergehenden Ansprüche, **dadurch gekennzeichnet, dass** das Dienelastomer [A]- folgender Formel entspricht:
[B-C]-
wobei:
- Block B aus einem Polyisopren oder einem Polybutadien gebildet ist,
- Block C aus einem Dienelastomer gebildet ist, dessen molarer Anteil an Einheiten, die von konjugierten Dienen stammen, mehr als 15% beträgt,
- die zahlengemittelte Molmasse Mn1 von Block B zwischen 2 500 und 20 000 g/mol liegt,
- die zahlengemittelte Molmasse Mn2 von Block C zwischen 80 000 und 350 000 g/mol liegt,
- der Gehalt an 1,2-Verknüpfungen im Block B zwischen 1 und 20% beträgt, wenn B ein Polybutadien-Block ist,
- der Gehalt an 3,4-Verknüpfungen in jedem Block B zwischen 1 und 25% beträgt, wenn B ein PolyisoprenBlock ist,
- das B-C-Copolymer eine monomodale Molmassenverteilung vor einer etwaigen Funktionalisierung oder einer etwaigen Sternbildung und einen Polydispersitätsindex vor einer etwaigen Funktionalisierung oder einer etwaigen Sternbildung kleiner gleich 1,3 aufweist.

10. Zusammensetzung nach Anspruch 9, **dadurch gekennzeichnet, dass** das Verhältnis der zahlengemittelten Molmasse Mn1 von jedem Polybutadien- oder Polyisopren-Endblock B zur zahlengemittelten Molmasse Mn2 von jedem der Blöcke C zwischen 5 und 20% beträgt.

11. Zusammensetzung nach Anspruch 9 oder 10, **dadurch gekennzeichnet, dass** Block C ausgewählt ist aus StyrolButadien-Copolymeren, Styrol-Isopren-Copolymeren, Butadien-Isopren-Copolymeren, Styrol-Butadien-Isopren-Copolymeren, Polyisopren, wenn der benachbarte Block B ein Polybutadien ist, und Polybutadien, wenn der benachbarte Block B ein Polyisopren ist.

12. Zusammensetzung nach einem der Ansprüche 1 bis 8, **dadurch gekennzeichnet, dass** das Dienelastomer a) eine funktionelle Amingruppe an einem oder an allen Enden nicht mit Zinn funktionalisierter Ketten umfasst.

13. Zusammensetzung nach einem der Ansprüche 1 bis 8, **dadurch gekennzeichnet, dass** das Dienelastomer b) eine funktionelle Amingruppe an einem der Kettenenden umfasst.

14. Zusammensetzung nach einem der Ansprüche 1 bis 8, **dadurch gekennzeichnet, dass** das Dienelastomer c) eine funktionelle Amingruppe an den Enden nicht mit Zinn sternförmig verzweigter Ketten umfasst.

15. Zusammensetzung nach einem der vorhergehenden Ansprüche, **dadurch gekennzeichnet, dass** das oder die funktionalisierte(n) Dienelastomer(e) 30 bis 100 phr der Zusammensetzung ausmachen.

16. Zusammensetzung nach einem der vorhergehenden Ansprüche, **dadurch gekennzeichnet, dass** der Ruß oder die Ruße mit einer spezifischen CTAB-Oberfläche von 100 bis 200 m²/g, vorzugsweise von 120 bis 180 m²/g, 30 bis 100 phr ausmachen.

17. Zusammensetzung nach einem der vorhergehenden Ansprüche, **dadurch gekennzeichnet, dass** sie ein Mittel zur chemischen Vernetzung umfasst.

18. Halbzeug aus Kautschuk für einen Reifen, **dadurch gekennzeichnet, dass** es eine Kautschukzusammensetzung nach einem der vorhergehenden Ansprüche umfasst.

19. Halbzeug nach Anspruch 18, **dadurch gekennzeichnet, dass** das Halbzeug eine Lauffläche ist.

20. Reifen, **dadurch gekennzeichnet, dass** er ein Halbzeug nach Anspruch 18 oder 19 aufweist.

## Claims

1. Rubber composition based on one or more functionalized diene elastomers and, as predominant filler, on one or more carbon blacks with a CTAB specific surface (measured according to Standard NFT 45-007, November 1987, method B) varying from 100 to 200 m²/g, preferably from 120 to 180 m²/g, the said functionalized diene elastomer or elastomers being composed:
a) of a diene elastomer functionalized, at the chain end or in the middle of the chain, by a tin functional group and corresponding to the following formula:
[*A*]*ₙ-X-*[*A*]*ₘ*
where n and m are integers of greater than or equal to 0, such that n+m=1 or 2,
b) of a content of less than 15% by weight, with respect to the total weight of the functionalized diene elastomer, of a non-tin-functional elastomer corresponding to the following formula:
[*A*]
where:
- A is a diene elastomer, the A blocks being identical to one another,
- X is a tin-comprising group,
- the elastomer A exhibits a monomodal distribution of molecular weights before optional functionalization and a polydispersity index before optional functionalization of less than or equal to 1.3.

2. Composition according to Claim 1, **characterized in that** the functionalized diene elastomer comprises a diene elastomer star-branched by tin c) corresponding to the following formula:
[*A*]*ₒ-Y-*[*A*]*ₚ*
where:
- o and p are integers of greater than or equal to 0 and such that o+p≥3 and o+p≤6,
- A is the diene elastomer as defined in Claim 1, it being understood that it exhibits a monomodal distribution of molecular weights before star-branching and a polydispersity index before star-branching of less than or equal to 1.3,
- Y is a tin-comprising group.

3. Composition according to Claim 2, **characterized in that** the functionalized diene elastomer comprises from 5% to 45% by weight, preferably from 10% to 30% by weight, with respect to the total weight of the functionalized diene elastomer, of the said elastomer star-branched by tin c).

4. Composition according to any one of Claims 1 to 3, **characterized in that** the functionalized diene elastomer according to the invention comprises a content strictly of greater than 0% by weight and of less than 10% by weight, and more preferably a content of less than 5% by weight, with respect to the total weight of the functionalized diene elastomer, of the said non-tin-functional elastomer b).

5. Composition according to any one of the preceding claims, **characterized in that** the functionalization of the diene elastomer a) is obtained with a monohalotin or dihalotin functionalization agent.

6. Composition according to any one of the preceding claims, **characterized in that** the star-branching of the diene elastomer c) can be obtained with a tri- or tetrahalotin star-branching agent.

7. Composition according to any one of the preceding claims, **characterized in that** the star-branched diene elastomer c) is a star-branched elastomer having 4 branches.

8. Composition according to any one of the preceding claims, **characterized in that** the diene elastomer is chosen from polybutadienes, random or block butadiene/styrene copolymers, random or block butadiene/isoprene copolymers, random or block butadiene/styrene/isoprene copolymers, random or block styrene/isoprene copolymers and synthetic polyisoprene.

9. Composition according to any one of the preceding claims, **characterized in that** the diene elastomer [A]- corresponds to the following formula:
[*B-C*]*-*
where:
- the B block is composed of a polyisoprene or of a polybutadiene,
- the C block is composed of a diene elastomer, the molar content of units resulting from conjugated dienes of which is greater than 15%,
- the number-average molecular weight Mn1 of the B block varies from 2 500 to 20 000 g/mol,
- the number-average molecular weight Mn2 of the C block varies from 80 000 to 350 000 g/mol,
- the content of 1,2 linkages in the B block is between 1% and 20% in the case where B is a polybutadiene block,
- the content of 3,4 linkages in each B block is between 1% and 25% in the case where B is a polyisoprene block,
- the B-C copolymer exhibits a monomodal distribution of molecular weights before optional functionalization or optional star-branching and a polydispersity index before optional functionalization or optional star-branching of less than or equal to 1.3.

10. Composition according to Claim 9, **characterized in that** the ratio of the number-average molecular weight Mn1 of each end polybutadiene or polyisoprene B block to the number-average molecular weight Mn2 of each of the C blocks varies from 5% to 20%.

11. Composition according to Claim 9 or 10, **characterized in that** the C block is chosen from copolymers of styrene and butadiene, copolymers of styrene and isoprene, copolymers of butadiene and isoprene, styrene/butadiene/isoprene copolymers, polyisoprene when the neighbouring B block is a polybutadiene and polybutadiene when the neighbouring B block is a polyisoprene.

12. Composition according to any one of Claims 1 to 8, **characterized in that** the diene elastomer a) comprises an amine functional group at one or all of the ends of chains not functionalized by tin.

13. Composition according to any one of Claims 1 to 8, **characterized in that** the diene elastomer b) comprises an amine functional group at one of the ends of chains.

14. Composition according to any one of Claims 1 to 8, **characterized in that** the diene elastomer c) comprises an amine functional group at the ends of chains not star-branched by tin.

15. Composition according to any one of the preceding claims, **characterized in that** the functionalized diene elastomer or elastomers represent from 30 to 100 phr of the composition.

16. Composition according to any one of the preceding claims, **characterized in that** the carbon black or blacks with a CTAB specific surface varying from 100 to 200 m²/g, preferably from 120 to 180 m²/g, represent from 30 to 100 phr.

17. Composition according to any one of the preceding claims, **characterized in that** it comprises a chemical crosslinking agent.

18. Semi-finished article made of rubber for a tyre, **characterized in that** it comprises a rubber composition as defined in any one of the preceding claims.

19. Semi-finished article according to Claim 18, **characterized in that** the said article is a tread.

20. Tyre, **characterized in that** it comprises a semi-finished article as defined in Claim 18 or 19.
